# EUROPEAN PATENT APPLICATION

(11) **EP 4 672 555 A1**
(43) Date of publication of application: **31.12.2025**
(21) Application number: 24760155.2
(22) Date of filing: 08.02.2024
(51) Int. Cl.: H02J 50/80, H02J 7/00, H02J 50/20, H02J 50/40, H04B 1/59

(54) **SYSTEM, TRANSMITTER, RECEIVER, METHOD, AND PROGRAM**

(30) Priority: 22.02.2023 JP 2023025976
(71) Applicant: Aeterlink Corp., Tokyo 130-0013 (JP)
(72) Inventor: KODATE Naoto, Tokyo 130-0013 (JP); MURAI Akito, Tokyo 130-0013 (JP)
(74) Representative: Zimmermann & Partner Patentanwälte mbB
(86) International application number: PCT/JP2024/004268
(87) International publication number: WO 2024/176853

(57) **Abstract**

This system comprises a transmitter and one or a plurality of receivers. The transmitter executes a step for transmitting a power feed signal, a step for receiving a data signal from the receiver including receiver identification information, and a step for registering the receiver on the basis of the received data signal. The receiver is assigned unique identification information, and when the capacity stored in a power storage unit reaches a prescribed value according to the power feed signal transmitted from the transmitter, executes the step for transmitting the data signal including identification information.

## Description

### TECHNICAL FIELD

The present disclosure relates to a system, a transmitter, a receiver, a method, and a program.

### BACKGROUND ART

Patent Literature 1 describes a wireless power transmission device that wirelessly supplies power to a power-receiving target and is capable of switching between a state in which normal power transmission is performed and a state in which power weaker than normal is transmitted.

### CITATION LIST

### PATENT LITERATURE

### Patent Literature 1: JP2020-028193A

### SUMMARY OF INVENTION

### TECHNICAL PROBLEM

In Patent Literature 1, in a suppressed transmission mode, an operator performs a pairing process for associating a wireless transmission device with each sensor unit. However, there is no description of simultaneous pairing between the wireless transmission device and a plurality of sensor units.

An object of the present disclosure is to efficiently perform pairing between a transmitter and a plurality of receivers in a wireless power supply system.

### SOLUTION TO PROBLEM

A system includes a transmitter and one or more receivers. The transmitter is configured to execute: a step of transmitting a power supply signal; a step of receiving, from the receiver, a data signal comprising identification information of the receiver; and a step of registering the receiver, based on the received data signal, and unique identification information is assigned to the receiver, and the receiver is configured to execute a step of transmitting the data signal comprising the identification information, in a case where an amount of power stored in a power storage unit by the power supply signal transmitted from the transmitter reaches a predetermined value.

### ADVANTAGEOUS EFFECTS OF INVENTION

According to the present disclosure, pairing between a transmitter and a plurality of receivers can be efficiently performed in a wireless power supply system.

### BRIEF DESCRIPTION OF DRAWINGS

FIG. 1 is a diagram showing an overall configuration of a WPT system 1 according to the present embodiment.
FIG. 2 is a block diagram showing a configuration example of a transmitter 100 and a receiver 200 shown in FIG. 1.
FIG. 3 is a schematic diagram showing an example of a data structure of transmitter information 1061 stored in the transmitter 100.
FIG. 4 is a schematic diagram showing an example of a data structure of transmitter information 2081 stored in the receiver 200.
FIG. 5 is a schematic diagram showing an example of a data structure of receiver information 2082 stored in the receiver 200.
FIG. 6 is a diagram for explaining operations of the transmitter 100 and a plurality of receivers 200 when the transmitter 100 and the plurality of receivers 200 perform pairing.
FIG. 7 is a diagram for explaining another example of the operations of the transmitter 100 and the plurality of receivers 200 when the transmitter 100 and the plurality of receivers 200 perform pairing.
FIG. 8 is a block diagram showing a configuration example of the transmitter 100 and the receiver 200 according to a modification.
FIG. 9 is a diagram for explaining another example of the operations of the transmitter 100 and the plurality of receivers 200 when the transmitter 100 and the plurality of receivers 200 perform pairing.
FIG. 10 is a block diagram showing a basic hardware configuration of a computer 90.

### DESCRIPTION OF EMBODIMENTS

Hereinafter, embodiments of the present invention will be described with reference to the drawings. In the following description, identical parts are given the same reference signs. Their names and functions are also the same. Therefore, a detailed description thereof will not be repeated.

### <Outline>

In a WPT (Wireless Power Transfer) system, there exist a transmitter configured to transmit a power supply signal, and a plurality of receivers configured to receive the power supply signal. By using a time difference that occurs when the plurality of receivers receive the power supply signal and store power, the transmitter and the plurality of receivers are associated while suppressing radio interference. The associated transmitter and plurality of receivers are configured to transmit and receive data signals.

### <1 Overall Configuration Diagram of System>

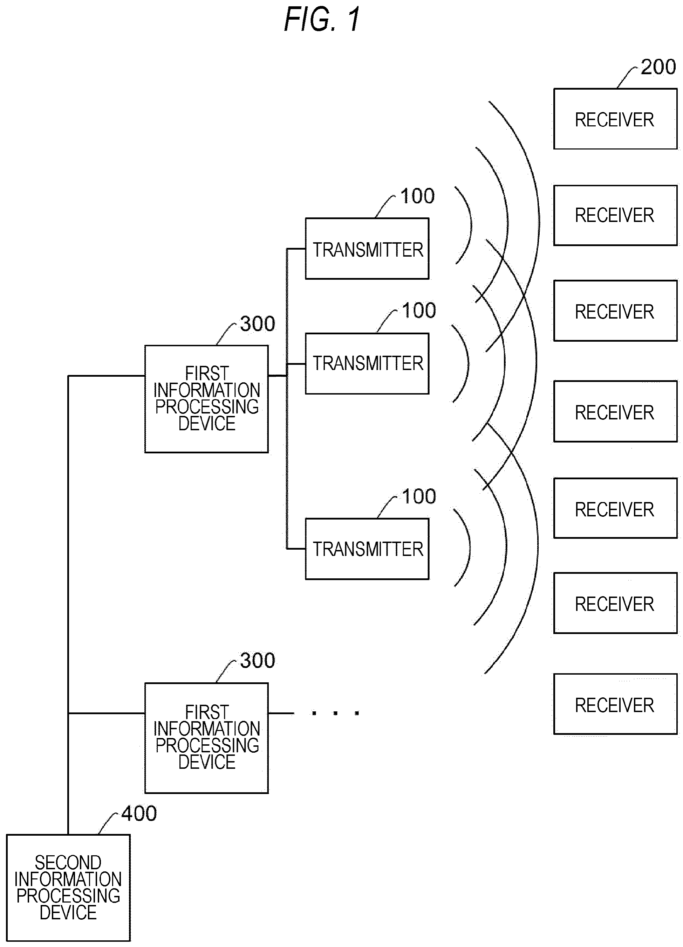

FIG. 1 is a diagram showing an overall configuration of a WPT system 1 according to the present embodiment.

The WPT system 1 shown in FIG. 1 includes, for example, a transmitter 100, a receiver 200, a first information processing device 300, and a second information processing device 400. The WPT system 1 shown in FIG. 1 is used, for example, in a building, a factory, or the like. Note that the connection between the transmitter 100 and the first information processing device 300, and the connection between the first information processing device 300 and the second information processing device 400 may be either wired or wireless.

In FIG. 1, an example is shown in which the WPT system 1 includes three transmitters 100. However, the number of transmitters 100 included in the WPT system 1 is not limited to three. The number of transmitters 100 included in the WPT system 100 may be 2 or less, or 4 or more.

In FIG. 1, an example is shown in which the WPT system 1 includes seven receivers 200. However, the number of receivers 200 included in the WPT system 1 is not limited to seven. The number of receivers 200 included in the WPT system 200 may be 6 or less, or 8 or more.

In FIG. 1, an example is shown in which the WPT system 1 includes two first information processing devices 300. However, the number of first information processing devices 300 included in the WPT system 1 is not limited to two. The number of first information processing devices 300 included in the WPT system 1 may be one, or 3 or more.

The transmitter 100 is configured to transmit, for example, a power supply signal or a data signal to the receiver 200. The transmitter 100 is configured to transmit the power supply signal to the receiver 200 by radio waves in the 920 MHz band, for example. The transmitter 100 is configured to transmit the data signal to the receiver 200 by radio waves in the 2.4 GHz band, for example. The transmitter 100 may be configured to transmit the data signal by radio waves in the 920 MHz band.

The transmitter 100 may be configured to transmit the power supply signal to one receiver 200, or may be configured to transmit the power supply signal to a plurality of receivers 200, for example. The transmitter 100 may be configured to transmit the data signal to one receiver 200, or may be configured to transmit the data signal to a plurality of receivers 200, for example. The transmitter 100 may be configured to transmit the same data signal as that of another transmitter 100, or may be configured to transmit a different data signal from that of another transmitter 100, for example. The transmitter 100 may be configured to transmit a predetermined command signal to the receiver 200 as the data signal, or may be configured to transmit a preset signal to the receiver 200 as the data signal, for example.

The transmitter 100 is configured to receive, for example, a data signal transmitted from the receiver 200. The transmitter 100 may be configured to receive a data signal transmitted from one receiver 200, or may be configured to receive data signals transmitted from a plurality of receivers 200, for example. The transmitter 100 is configured to transmit the data signal transmitted from the receiver 200 to the first information processing device 300. The transmitter 100 is configured to transmit information regarding a state of the transmitter 100 to the first information processing device 300.

The receiver 200 is configured to receive, for example, the power supply signal or data signal transmitted from the transmitter 100. When the receiver 200 includes, for example, a power storage unit, the receiver is configured to convert the power supply signal transmitted from the transmitter 100 into power and stores the converted power in the power storage unit. When the receiver 200 includes, for example, a predetermined sensor, the receiver is configured to convert the power supply signal transmitted from the transmitter 100 into power and drive the sensor with the converted power.

The receiver 200 is configured to transmit, for example, information regarding a state of the receiver 200 or information regarding a measurement result by the sensor, to the transmitter 100 as a data signal.

The first information processing device 300 is an information processing device configured to monitor the operations of the transmitter 100 and the receiver 200 accommodated in the WPT system 1. For example, the first information processing device 300 is configured to determine whether the transmitter 100 or the receiver 200 is in a preset state, based on information regarding the states of the transmitter 100 and the receiver 200 transmitted from the transmitter 100. When it is determined that the transmitter 100 or the receiver 200 is in the preset state, the first information processing device 300 is configured to transmit predetermined information to the second information processing device 400.

Additionally, the first information processing device 300 is configured to accumulate information regarding the transmitter 100 and the receiver 200 accommodated in the WPT system 1. For example, the first information processing device 300 is configured to store the information regarding the states of the transmitter 100 and the receiver 200 transmitted from the transmitter 100 in a storage unit provided in the first information processing device 300.

Additionally, the first information processing device 300 is configured to control the operation of the transmitter 100 accommodated in the WPT system 1. For example, the first information processing device 300 is configured to transmit a predetermined instruction or information to the transmitter 100.

Additionally, the first information processing device 300 is configured to control the operation of the second information processing device 400.

The second information processing device 400 is, for example, an information processing device that is operated by an administrator of the WPT system 1. When the second information processing device 400 receives, from the first information processing device 300, a notification to the effect that the transmitter 100, the receiver 200, or both accommodated in the WPT system 1 are in a predetermined state, the second information processing device presents, to a user, information indicating that the transmitter 100, the receiver 200, or both are in the predetermined state.

In addition, the second information processing device 400 is configured to analyze the information regarding the states of the transmitter 100 and the receiver 200 stored in the first information processing device 300, and present predetermined information to the user. The predetermined information includes, for example, the following:
· Information regarding the placement of the transmitter 100
· Information regarding the placement of the receiver 200
· Information regarding power consumption
· Information regarding power intensity

### <1.1 Configurations of Transmitter and Receiver>

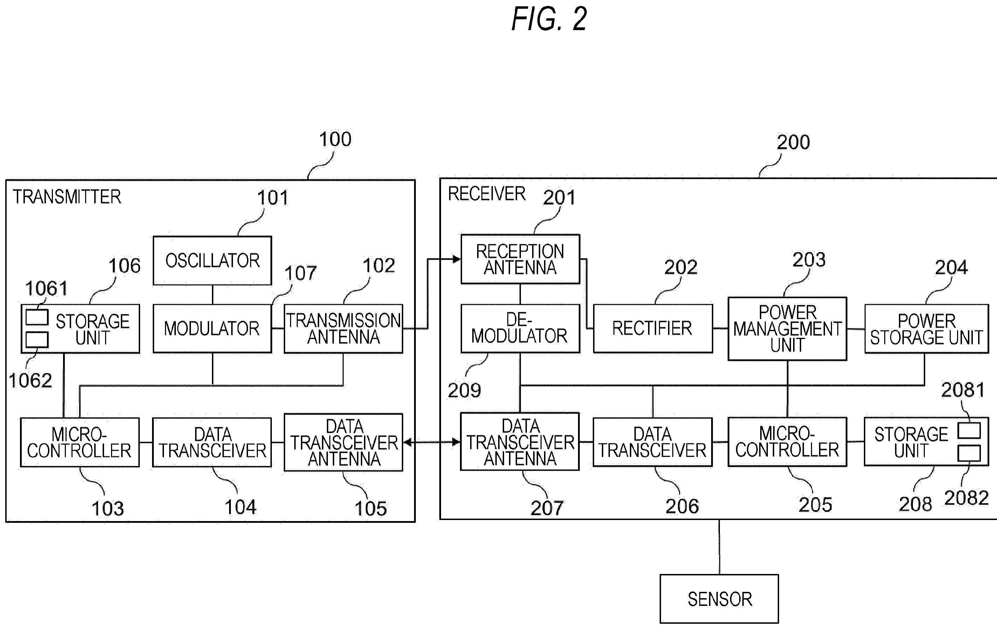

FIG. 2 is a block diagram showing a configuration example of the transmitter 100 and the receiver 200 shown in FIG. 1. As shown in FIG. 2, the transmitter 100 and the receiver 200 are spaced apart from each other by, for example, a predetermined interval. For example, the transmitter 100 and the receiver 200 are installed spaced apart from each other by a distance of several meters. Specifically, for example, the transmitter 100 is fixedly installed at an elevated position indoors, such as on the ceiling or at a predetermined high position provided on a wall. The receiver 200 is installed on a predetermined device indoors or placed near a device requiring power supply. Additionally, the receiver 200 may be carried by the user. The transmitter 100 is configured to transmit the power supply signal to the receiver 200 by radio waves in the 920 MHz band, for example. The receiver 200 is configured to convert the power supply signal transmitted from the transmitter 100 into power, and store the converted power or supply the converted power to a predetermined device.

The transmitter 100 includes, for example, an oscillator 101, a modulator 107, a transmission antenna 102, a microcontroller (controller) 103, a data transceiver 104, a data transceiver antenna 105, and a storage unit 106. The oscillator 101, the modulator 107, the microcontroller 103, the data transceiver 104, the data transceiver antenna 105, the storage unit 106, or a combination of at least one of these may be mounted on, for example, a printed circuit board (PCB).

The oscillator 101 is configured to oscillate a signal in a predetermined frequency band, for example, in the 920 MHz band.

The modulator 107 is configured to perform modulation processing on the oscillated signal according to an instruction from the microcontroller 103. The modulator 107 is configured to modulate the oscillated signal with a signal set by the microcontroller 103, for example. The modulation method may be amplitude modulation, frequency modulation, or phase modulation. The modulated signal may be amplified, if necessary, to remove unnecessary frequency components.

The transmission antenna 102 is configured to efficiently transmit, for example, radio waves in the 920 MHz band. The transmission antenna 102 is configured to radiate a signal modulated by the modulator 107 as a power supply signal.

The microcontroller 103 is configured to control the operation of the transmitter 100. The microcontroller 103 is implemented, for example, by a single-board computer equipped with an ARM processor. The microcontroller 103 is configured to control, for example, the transmission of radio waves by the transmission antenna 102.

Additionally, the microcontroller 103 is configured to control the processing of associating the transmitter 100 with the plurality of receivers 200. That is, the microcontroller 103 is configured to control pairing between the transmitter 100 and the plurality of receivers 200.

The data transceiver 104 is configured to perform processing such as digital-to-analog conversion and modulation of analog data. In addition, the data transceiver 104 is configured to perform processing such as demodulation of a data signal received by the data transceiver antenna 105 and digitization of the demodulated data. The data transceiver 104 is configured to extract a predetermined signal from a data signal received by the data transceiver antenna 105, convert it into digital data, and transmit the converted digital data to the microcontroller 103, for example.

The data transceiver antenna 105 is configured to efficiently transmit and receive, for example, radio waves in the 2.4 GHz band. The data transceiver antenna 105 is configured to radiate a data signal supplied from the data transceiver 104. Additionally, the data transceiver antenna 105 is configured to receive a data signal transmitted from the receiver 200.

The storage unit 106 is implemented by, for example, a memory or the like, and stores data and programs that are used by the transmitter 100. The storage unit 106 is configured to store, for example, transmitter information 1061 and receiver information 1062. The transmitter information 1061 includes, for example, information regarding the transmitter. The information regarding the transmitter includes, for example, identification information of the transmitter. The transmitter information 1061 is stored in advance in the storage unit 106, for example.

The receiver information 1062 includes, for example, information regarding the receiver 200 to be paired. The information regarding the receiver 200 to be paired includes, for example, identification information of the associated receiver 200 and identification information of the receiver 200 that is preset to be paired with the transmitter 100. The identification information of the receiver 200, which is preset to be paired with the transmitter 100, may be stored in advance in the storage unit 106, or may be transmitted from the first information processing device 300, for example. Additionally, the identification information of the receiver 200, which is preset to be paired with the transmitter 100, need not be stored.

The receiver 200 includes, for example, a reception antenna 201, a rectifier 202, a demodulator 209, a power management unit 203, a power storage unit 204, a microcontroller 205, a data transceiver 206, a data transceiver antenna 207, and a storage unit 208. The reception antenna 201, the rectifier 202, the demodulator 209, the power management unit 203, the power storage unit 204, the microcontroller 205, the data transceiver 206, the data transceiver antenna 207, the storage unit 208, or a combination of at least one of these may be mounted on a PCB or a flexible printed circuit (FPC), for example.

The reception antenna 201 is configured to efficiently receive, for example, radio waves in the 920 MHz band. The reception antenna 201 is configured to receive a power supply signal radiated from the transmission antenna 102.

The rectifier 202 is configured to rectify the radio waves received as a power supply signal and converts the same into a direct current voltage.

The demodulator 209 is configured to receive a signal extracted, for example, by a directional coupler or the like, from the power supply signal received, for example, by the reception antenna 201. The demodulator 209 is configured to demodulate the extracted signal and generate a predetermined signal. The demodulator 209 is configured to output the generated signal to the microcontroller 205.

The power management unit 203 is configured to manage a direct current voltage. For example, the power management unit 203 is configured to control a charging voltage based on the direct current voltage. The power management unit 203 is configured to charge the power storage unit 204 by controlling the charging voltage. In addition, the power management unit 203 is configured to supply a DC voltage to a connected component when an amount of power stored in the power storage unit 204 is equal to or greater than a predetermined amount, for example.

Additionally, the power management unit 203 is configured to discharge the power stored in the power storage unit 204 in accordance with control from the microcontroller 205.

The power storage unit 204 is configured to store power in accordance with an instruction from the power management unit 203. The power storage unit 204 is implemented by, for example, a battery, a capacitor, or the like. Additionally, the power storage unit 204 is configured to discharge the stored power in accordance with an instruction from the power management unit 203.

The microcontroller 205 is configured to control the operation of the receiver 200. The microcontroller 205 is driven by a direct current voltage supplied from the power management unit 203 or by power stored in the power storage unit 204. The microcontroller 205 is configured to control the power management unit 203 to discharge power stored in the power storage unit 204.

Additionally, the microcontroller 205 is configured to control the processing of associating the transmitter 100 and the receiver 200 with each other. That is, the microcontroller 205 is configured to control the pairing between the transmitter 100 and the receiver 200.

The receiver 200 may be connected to, for example, various sensors. For example, a heat sensor, a temperature sensor, a light sensor, a humidity sensor, a vibration sensor, and the like are connected to the receiver 200. The sensor connected to the receiver 200 is driven by, for example, a direct current voltage supplied from the power management unit 203 or power discharged from the power storage unit 204. The microcontroller 205 is configured to continuously or intermittently monitor a voltage value at a predetermined portion of the receiver 200, a status of a sensor connected to the receiver 200, information detected by the sensor, and the like. The microcontroller 205 is configured to transmit a voltage value at a predetermined portion of the receiver 200, a status of a sensor connected to the receiver 200, information detected by the sensor, and the like to the data transceiver 206 as digital data. Note that the sensor may be built in the receiver 200.

The data transceiver 206 is configured to perform processing such as conversion of digital data supplied from the microcontroller 205 into analog data and modulation of analog data. In addition, the data transceiver 206 is configured to perform processing such as demodulation of a data signal received by the data transceiver antenna 207 and digitization of the demodulated data. The data transceiver 206 is driven by, for example, a direct current voltage supplied from the power management unit 203, or power discharged from the power storage unit 204.

The data transceiver antenna 207 is configured to efficiently transmit and receive, for example, radio waves in the 2.4 GHz band. The data transceiver antenna 207 is configured to radiate a data signal supplied from the data transceiver 206. Additionally, the data transceiver antenna 207 is configured to receive a data signal transmitted from the transmitter 100. For example, the data transceiver antenna 207 is driven by, for example, a direct current voltage supplied from the power management unit 203 or power discharged from the power storage unit 204.

The storage unit 208 is implemented by, for example, a memory or the like, and stores data and programs that are used by the receiver 200. The storage unit 208 is configured to store, for example, transmitter information 2081 and receiver information 2082. The transmitter information 2081 includes, for example, information regarding the associated transmitter 100. The information regarding the associated transmitter 100 includes, for example, identification information of the transmitter 100.

The receiver information 2082 includes, for example, information regarding the device itself (receiver). The information regarding the receiver includes, for example, identification information of the receiver, information regarding a specification for transmitting a data signal during pairing, and information regarding a threshold value of the power storage unit 204.

The information regarding the specification for transmitting a data signal during pairing indicates, for example, a frequency channel for transmitting the data signal. For example, the frequency channel is set based on the identification information. Specifically, for example, when an ID as the identification information is an even number, channel 1 is set, and when it is an odd number, channel 2 is set.

Additionally, the information regarding the specification for transmitting a data signal during pairing indicates, for example, a cycle for transmitting the data signal. For example, the cycle is set based on the identification information. Specifically, for example, when an ID as the identification information is an even number, 0.7 seconds is set, and when it is an odd number, 0.8 seconds is set.

Note that the specification for transmitting a data signal during pairing is not limited to being varied based on whether the identification information is an odd number or an even number. The specification may vary depending on each divisor of a predetermined natural number. In addition, the information regarding the specification for transmitting a data signal during pairing is not limited to being based on the identification information of the receiver 200, and may be set for each receiver 200.

The information regarding the threshold value of the power storage unit 204 is information that is used when the receiver 200 responds to the transmitter 100. The threshold value is, for example, a power value at which the receiver 200 can perform a pairing process. This power value is lower than, for example, a power value that is required when the receiver 200 operates. The threshold value is, for example, the same value for all the receivers 200. An initial value of the power stored in the power storage unit 204 differs for each receiver 200. For this reason, even when the threshold value is set to the same value for each receiver, the time required to reach the set power value from the start of charging differs for each receiver 200. On the other hand, the threshold value may differ for each receiver 200. Accordingly, the time required to reach the set power value from the start of charging varies for each receiver 200, regardless of the initial power value.

Additionally, regarding the threshold value, a plurality of values may be stored. For example, different threshold values may be used for the first pairing and the second and subsequent pairings. In the first pairing, a power value lower than the power value required when the receiver 200 operates is set as the threshold value, for example. For this reason, the operation is stopped, and there is a possibility that the amount of power stored in the power storage unit 204 of the receiver 200, which is a target for second or subsequent pairings, has exceeded the threshold value set for the first pairing. Therefore, in second or subsequent pairings, a power value higher than the threshold value used in the first pairing is set as the threshold value. Accordingly, it is possible to suppress the possibility that the stored power has exceeded the threshold value, even when pairing is performed after stopping the operation of the receiver 200, for example.

### <2 Data Structure>

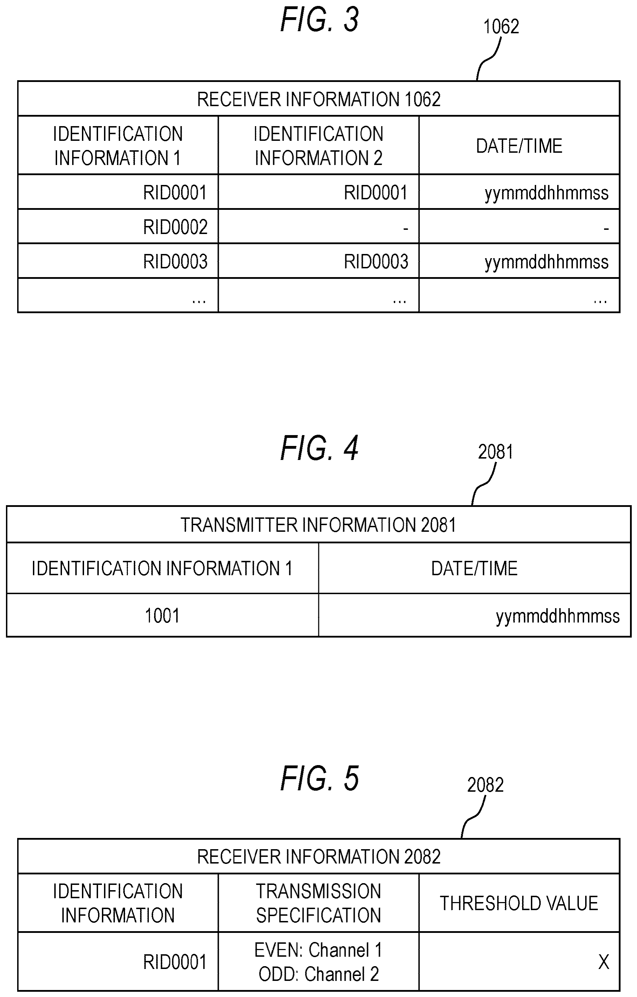

FIG. 3 is a schematic diagram showing an example of a data structure of the transmitter information 1061 stored in the transmitter 100. Note that FIG. 3 is an example and data not described therein is not excluded. In addition, even data listed in the same table may be stored in separate memory areas within the storage unit 106.

The receiver information 1062 shown in FIG. 3 is, for example, a table having columns for identification information 1 (used as a key), identification information 2, and date/time. The identification information 1 is a field that stores identification information of a receiver 200 scheduled to be paired. The information stored in the identification information 1 may be stored in advance in the storage unit 106, or may be transmitted from the first information processing device 300. The identification information 2 is a field that stores identification information of a receiver 200 associated by the pairing process. The information stored in the identification information 2 is updated based on information transmitted from the receiver 200. The date/time is a field that stores date and time associated with a receiver 200.

FIG. 4 is a schematic diagram showing an example of a data structure of the transmitter information 2081 stored in the receiver 200. Note that FIG. 4 is an example and data not described therein is not excluded. In addition, even data listed in the same table may be stored in separate memory areas within the storage unit 208.

The transmitter information 2081 shown in FIG. 4 is, for example, a table having columns for identification information (used as a key) and date/time. The identification information is a field that stores identification information of a transmitter 100 associated by the pairing process. The information stored in the identification information is updated based on information transmitted from the transmitter 100. The date/time is a field that stores date and time associated with the transmitter 100.

FIG. 5 is a schematic diagram showing an example of a data structure of the receiver information 2082 stored in the receiver 200. Note that FIG. 5 is an example and data not described therein is not excluded. In addition, even data listed in the same table may be stored in separate memory areas within the storage unit 208.

The receiver information 2082 shown in FIG. 5 is a table having columns for identification information (used as a key), transmission specification, and threshold value. The identification information is a field that stores identification information of the corresponding receiver. The transmission specification is a field that stores information regarding a specification for transmitting a data signal during pairing. Specifically, for example, the transmission specification field stores a transmission specification based on the identification information, such as "EVEN: Channel 1, ODD: Channel 2." In addition, for example, the transmission specification field stores a transmission specification based on the identification information, such as "EVEN: 0.7s, ODD: 0.8s." The threshold value is a field that stores a threshold value for an amount of stored power when responding to transmitter 100.

### <3 Operations During Pairing Between Transmitter and Receiver>

### (Example 1)

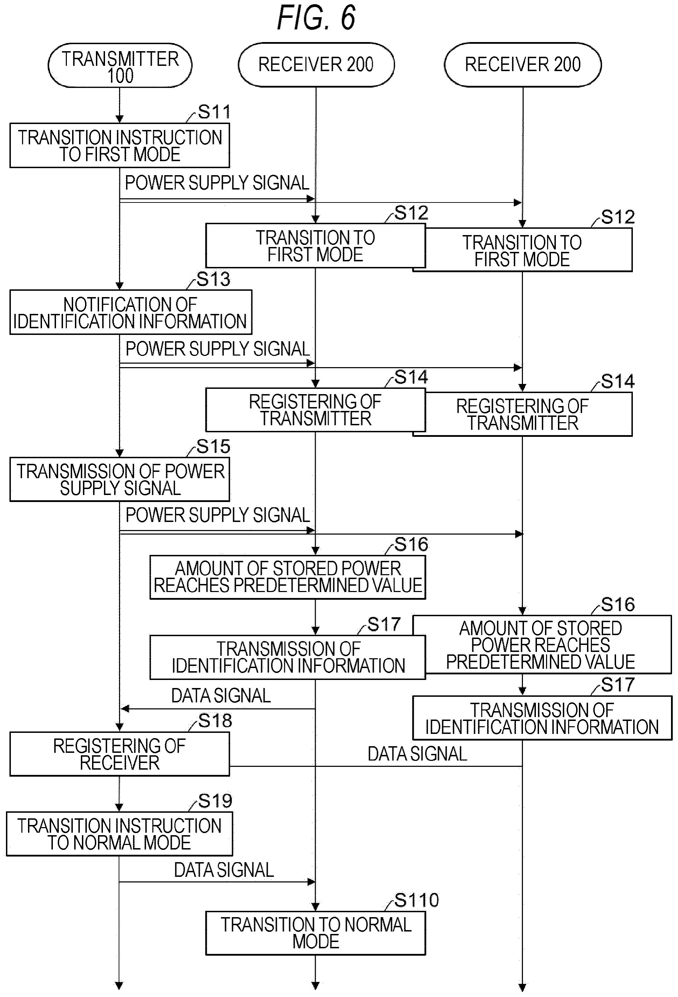

FIG. 6 is a diagram for explaining operations of the transmitter 100 and a plurality of receivers 200 in a case where the transmitter 100 and the plurality of receivers 200 perform pairing. In Example 1, a case is described in which a plurality of receivers 200 are shifted from a normal operation mode to a first mode, and then the transmitter 100 and the receivers 200 are associated. A normal operation mode is, for example, a mode in which the receiver 200 uses a power supply signal transmitted from the transmitter 100 and performs sensing using a sensor or the like. The first mode is a mode for associating the transmitter 100 and the receiver 200 with each other. For example, in the first mode, sensing and other operations are stopped to associate the transmitter 100 and the receiver 200 with each other.

In Example 1, for example, the receiver 200 may be a receiver 200 that performs pairing with the transmitter 100 for the first time. That is, for example, the receiver 200 may be a receiver 200 that is operated for the first time before being installed at a predetermined location. In the present embodiment, the receiver 200 that performs pairing with the transmitter 100 for the first time includes, for example, a receiver 200 that is powered on for the first time, a receiver 200 in which a pairing identification state is not recorded in a ROM, and the like. In addition, for example, the receiver 200 may be a receiver 200 that has been paired with the transmitter 100 and installed at a predetermined location, and then needs to be paired again. That is, for example, the receiver 200 may be a receiver 200 that has completed activation after being installed at a predetermined location.

An administrator of the WPT system 1 instructs a transmitter 100 to initiate pairing when a plurality of receivers 200 are present within a predetermined range. The instruction to initiate pairing may be input by pressing a physical button provided on the transmitter 100, or may be input via the first information processing device 300.

When pairing is initiated, in step S11, the microcontroller 103 of the transmitter 100 instructs the plurality of receivers 200 to transition to the first mode. Specifically, for example, the microcontroller 103 modulates the power supply signal in accordance with a predetermined rule. The microcontroller 103 modulates the power supply signal with an instruction signal to switch the receiver 200 into the first mode, for example. More specifically, for example, the microcontroller 103 controls the modulator 107 to amplitude modulate, frequency modulate, or phase modulate the power supply signal with a command to switch the receiver 200 into the first mode. The transmission antenna 102 radiates the power supply signal modulated with the command signal into space. The command for switching to the first mode consists of, for example, 0 and 1.

The plurality of receivers 200 located within a predetermined range from the transmitter 100 is configured to receive the power supply signal radiated from the transmitter 100.

In step S12, upon receiving the power supply signal modulated with the instruction signal, the microcontroller 205 of the receiver 200 shifts the mode of the receiver 200 to the first mode. Specifically, the reception antenna 201 receives the power supply signal modulated with the instruction signal. The rectifier 202 rectifies the received power supply signal and converts it into a direct current voltage. The power management unit 203 controls the charging voltage based on the direct current voltage and charges the power storage unit 204.

A portion of the power supply signal is extracted, for example, by a directional coupler (not shown) and transmitted to the demodulator 209. The demodulator 209 demodulates the extracted signal and generates the instruction signal modulated onto the power supply signal. The demodulator 209 outputs the instruction signal to the microcontroller 205. When the microcontroller 205 receives the instruction signal, it shifts the receiver 200 to the first mode.

In step S13, the microcontroller 103 notifies its identification information to the plurality of receivers 200. Specifically, for example, the microcontroller 103 modulates the power supply signal in accordance with a predetermined rule. For example, when the transmission of the power supply signal modulated with the instruction signal satisfies a predetermined condition, the microcontroller 103 switches the signal to be modulated. More specifically, for example, when the microcontroller 103 transmits the power supply signal modulated with the instruction signal for a predetermined period, it switches the signal to be modulated. In addition, for example, when the microcontroller 103 transmits the power supply signal modulated with the instruction signal a predetermined number of times, it switches the signal to be modulated.

The microcontroller 103 modulates the power supply signal with, for example, the identification information of the device itself. Specifically, for example, the microcontroller 103 controls the modulator 107 to amplitude modulate, frequency modulate, or phase modulate the power supply signal with the ID "1001" of the transmitter. The transmission antenna 102 radiates the power supply signal modulated with the identification information into space.

The plurality of receivers 200 located within a predetermined range from the transmitter 100 receive the power supply signal radiated from the transmitter 100.

In step S14, the microcontroller 205 registers the transmitter 100. Specifically, the reception antenna 201 receives the power supply signal modulated with the identification information of the transmitter 100. The rectifier 202 rectifies the received power supply signal and converts it into a direct current voltage. The power management unit 203 controls the charging voltage based on the direct current voltage and charges the power storage unit 204.

A portion of the power supply signal is extracted, for example, by a directional coupler (not shown) and transmitted to the demodulator 209. The demodulator 209 demodulates the extracted signal and generates the identification information modulated onto the power supply signal. The demodulator 209 outputs the identification information to the microcontroller 205. When the microcontroller 205 receives the identification information, it stores the received identification information in the transmitter information 2081.

In step S15, the microcontroller 103 causes the transmission antenna 102 to transmit a power supply signal not modulated with the instruction signal or the identification information. For example, when the transmission of the power supply signal modulated with the identification information satisfies a predetermined condition, the microcontroller 103 stops modulating the power supply signal with the identification information. For example, when the microcontroller 103 transmits the power supply signal modulated with the identification information for a predetermined period, the microcontroller 103 stops modulating the power supply signal with the identification information. In addition, for example, when the microcontroller 103 transmits the power supply signal modulated with the identification information a predetermined number of times, the microcontroller 103 stops modulating the power supply signal with the identification information.

The plurality of receivers 200 located within a predetermined range from the transmitter 100 receive the power supply signal radiated from the transmitter 100.

In step S16, the microcontroller 205 determines whether an amount of power charged in the power storage unit 204 has reached a predetermined value. Specifically, the reception antenna 201 receives a power supply signal. The rectifier 202 rectifies the received power supply signal and converts it into a direct current voltage. The power management unit 203 controls the charging voltage based on the direct current voltage and charges the power storage unit 204. The microcontroller 205 determines whether an amount of power charged in the power storage unit 204 has reached a threshold value stored in the receiver information 2082. For example, the amount of power charged in the power storage unit 204 at the start of the pairing process differs for each receiver 200. For this reason, the timing at which the amount of power in the power storage unit 204 reaches the threshold value differs for each receiver 200, as shown in FIG. 6.

When a plurality of threshold values are stored in the receiver information 2082, for example, the microcontroller 205 sets a threshold value according to the number of times of pairing. For example, when this is the first pairing, the microcontroller 205 sets a low threshold value. Additionally, when the number of times of pairing is the second or subsequent times, the microcontroller 205 sets a high threshold value.

In step S17, when the amount of power charged in the power storage unit 204 reaches a threshold value, the microcontroller 205 transmits a data signal including the identification information of the receiver 200 to the transmitter 100. Specifically, when the amount of power charged in the power storage unit 204 reaches a threshold value, the microcontroller 205 reads out the identification information of the device itself from the receiver information 2082. The data transceiver 206 modulates a carrier wave with the extracted identification information and converts it into a data signal. The microcontroller 205 reads out the identification information of the associated transmitter 100 from the transmitter information 2081 and sets it as a transmission destination. The microcontroller 205 reads out information regarding the specification for data transmission from the receiver information 2082, and radiates a data signal from the data transceiver antenna 207 to the transmitter 100 as a destination in accordance with the read out specification.

For example, when the identification information stored in the receiver information 2082 is an even number, the specification stored in the receiver information 2082 is also an even number, and a predetermined transmission channel and a predetermined transmission cycle corresponding to such a case are available, the microcontroller 205 transmits a data signal using the predetermined transmission channel and the predetermined transmission cycle assigned to even numbers. In addition, for example, when the identification information stored in the receiver information 2082 is an odd number, the specification stored in the receiver information 2082 is also an odd number, and a predetermined transmission channel and a predetermined transmission cycle corresponding to such a case are available, the microcontroller 205 transmits a data signal using the predetermined transmission channel and the predetermined transmission cycle assigned to odd numbers.

The transmitter 100 located within a predetermined range from the receivers 200 receives the data signals radiated from the receivers 200.

In step S18, the microcontroller 103 registers the receivers 200. Specifically, the data transceiver 104 demodulates the received data signal and acquires the identification information of the receiver 200. The microcontroller 103 stores the acquired identification information in the receiver information 1062.

When the receiver 200 scheduled to be paired has been pre-registered in the receiver information 1062, the microcontroller 103 may determine whether pairing has been completed based on this information. For example, the microcontroller 103 compares the identification information of the receiver 200 scheduled to be paired with the newly stored identification information of the receiver 200. When there is a receiver 200 from which no data signal has been received as a response, the microcontroller 103 determines that the pairing has not been completed. The microcontroller 103 then continues the first mode and continues to radiate the power supply signal.

In step S19, the microcontroller 103 instructs the plurality of receivers 200 to transition to the normal operation mode. Specifically, for example, when there are responses from all the receivers 200 scheduled to be paired, the microcontroller 103 causes the receivers 200 to transition from the first mode to the normal operation mode. For example, the microcontroller 103 instructs the receiver 200 to transition to the normal operation mode by means of a data signal. That is, the microcontroller 103 modulates a carrier wave with a command instructing the transition to the normal operation mode, thereby generating a data signal. The microcontroller 103 reads out the identification information of the associated receiver 200 from the receiver information 1062 and sets it as a transmission destination. The microcontroller 103 radiates the data signal from the data transceiver antenna 105 to the receiver 200 as a destination.

In step S110, when the receiver 200 receives the data signal, the receiver 200 transitions from the first mode to the normal operation mode. Thereby, the transmitter 100 and the receiver 200 are associated with each other, and data signals are transmitted and received between the associated transmitter 100 and receiver 200.

In the description of FIG. 6, an example has been described in which, in step S15, the transmitter 100 transmits a power supply signal not modulated with the instruction signal or the identification information. However, the transmitter 100 may continue to transmit the power supply signal modulated with the identification information, without performing the processing of step S15.

### (Example 2)

In Example 1, the case has been described in which the receiver 200 is in the normal operation mode at the start of pairing, and transitions to the first mode in response to an instruction from the transmitter 100. The receiver 200 may be in the first mode at the start of pairing.

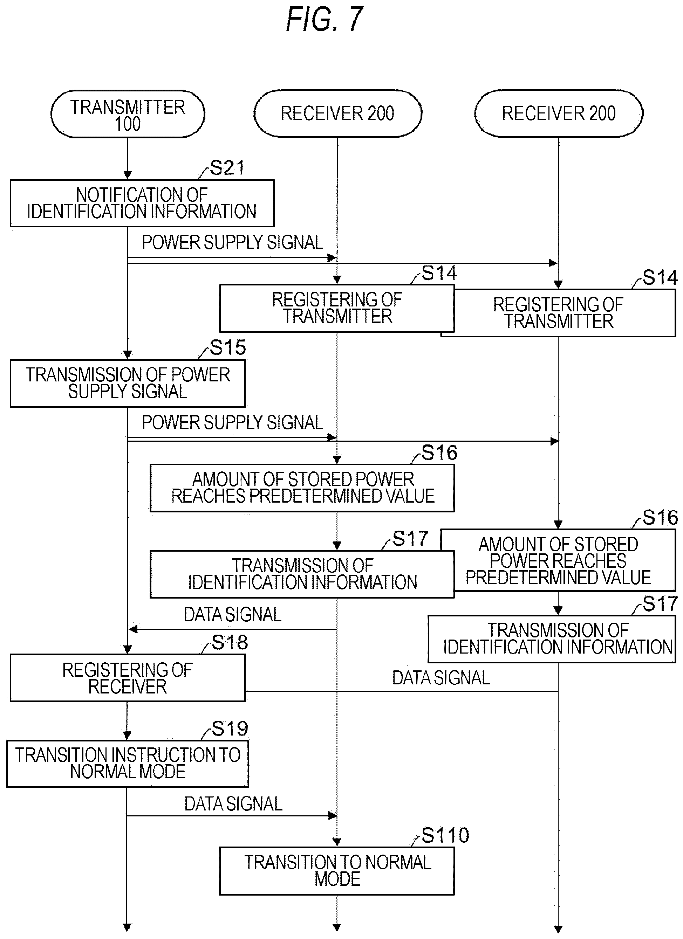

FIG. 7 is a diagram for explaining another example of the operations of the transmitter 100 and the plurality of receivers 200 when the transmitter 100 and the plurality of receivers 200 perform pairing.

In Example 2, for example, the receiver 200 is a receiver 200 that performs pairing with the transmitter 100 for the first time. In the present embodiment, the receiver 200 that performs pairing with the transmitter 100 for the first time includes, for example, a receiver 200 that is powered on for the first time, a receiver 200 in which a pairing identification state is not recorded in a ROM, and the like. An administrator of the WPT system 1 instructs a transmitter 100 to initiate pairing when a plurality of receivers 200 are present within a predetermined range. The instruction to initiate pairing may be input by pressing a physical button provided on the transmitter 100, or may be input via the first information processing device 300.

When the pairing is initiated, the microcontroller 103 notifies its identification information to the plurality of receivers 200 in step S21. Specifically, for example, the microcontroller 103 modulates the power supply signal in accordance with a predetermined rule. The microcontroller 103 modulates the power supply signal with, for example, the identification information of the device itself. Specifically, for example, the microcontroller 103 controls the modulator 107 to amplitude modulate, frequency modulate, or phase modulate the power supply signal with the ID "1001" of the transmitter. The transmission antenna 102 radiates the power supply signal modulated with the identification information into space.

The plurality of receivers 200 located within a predetermined range from the transmitter 100 receive the power supply signal radiated from the transmitter 100.

The transmitter 100 and the receiver 200 are associated with each other through steps S14 to S110, as in the example shown in FIG. 6. That is, the transmitter 100 and the receiver 200 are paired.

As described above, in the above embodiment, the system 1 includes the transmitter 100 and the plurality of receivers 200. The transmitter 100 transmits a power supply signal. The transmitter 100 receives, from the receiver 200, a data signal including identification information of the receiver 200. The transmitter 100 registers the receiver 200 based on the received data signal. The receiver 200 is assigned unique identification information and transmits a data signal including the identification information when the amount of power stored in the power storage unit 204 reaches a predetermined value due to the power supply signal transmitted from the transmitter 100.

The amount of power stored in the power storage unit 204 differs for each receiver 200. Therefore, by transmitting a response signal when the amount of power stored in the power storage unit 204 reaches a predetermined amount, it becomes possible to stagger the timing at which data signals are transmitted from the plurality of receivers 200. For this reason, it is possible to avoid interference between data signals transmitted from the plurality of receivers 200 to the transmitter 100 and to improve a situation in which the data signals cannot be received by the transmitter 100.

Note that, in the present embodiment, it is assumed that the transmitter 100 is arranged to enable power to be fed approximately uniformly throughout the space. Therefore, the pairing in the present embodiment is different from the pairing for efficiently transmitting a power supply signal from the transmitter 100 to the receiver 200.

Therefore, according to the system 1 of the present embodiment, in a wireless power supply system, pairing between the transmitter 100 and the plurality of receivers 200 can be efficiently performed.

In addition, in the above embodiment, the transmitter 100 instructs the plurality of receivers 200 to transition to the first mode for associating the transmitter 100 with the receiver 200. After instructing the transition to the first mode, the transmitter 100 transmits the identification information of the transmitter 100 to the plurality of receivers 200. The receiver 200 transmits a data signal to the transmitter 100 identified by the received identification information. Therefore, in addition to the initial pairing, it becomes possible to efficiently perform the pairing process for a receiver 200 that is already in operation. The receiver 200 in operation is installed at a location near the corresponding sensor. Since the pairing process can be collectively performed for the receivers 200 in operation, there is no need for an administrator to go to each location where the receivers 200 are installed, which reduces the burden associated with pairing. In addition, since the transition to the first mode can be wirelessly instructed, there is no need to transition to the pairing mode by pressing a physical button provided on the receiver 200, for example, which reduces the burden associated with pairing.

In addition, in the above embodiment, the transmitter 100 modulates a power supply signal with information for instructing the plurality of receivers 200 to transition to the first mode. Therefore, it becomes possible to instruct the receiver 200 to transition to the first mode by transmitting the power supply signal, thereby enabling more efficient execution of the pairing process..

In addition, in the above embodiment, the transmitter 100 transmits the identification information of the transmitter 100 to the receiver 200 by transmitting a power supply signal modulated with the identification information of the transmitter 100. Therefore, it becomes possible to notify the receiver 200 of the identification information of the transmitter 100 by transmitting the power supply signal, thereby enabling more efficient execution of the pairing process.

In addition, in the above embodiment, the first mode for associating the transmitter 100 and the receiver 200 with each other is preset in the receiver 200. The transmitter 100 transmits the identification information of the transmitter to the receiver 200 in the first mode. The receiver 200 transmits a data signal to the transmitter 100 identified by the received identification information. Therefore, it becomes possible to efficiently perform the pairing process for the receiver 200 set to the first mode as an initial state.

In addition, in the above embodiment, the receiver 200 transmits a data signal in accordance with a specification based on the identification information of the receiver. Therefore, even when data signals are transmitted from the plurality of receivers 200 at approximately the same time, it is possible to suppress interference between the data signals. That is, the transmitter 100 can receive each of the data signals.

In addition, in the above embodiment, the receiver 200 transmits a data signal using a frequency, period, or a combination thereof corresponding to its identification information. Therefore, even when data signals are transmitted from the plurality of receivers 200 at approximately the same time, it is possible to suppress interference between the data signals.

### <Modifications>

In the above embodiment, the case has been described in which the transmitter 100 transmits a power supply signal modulated with a predetermined signal. However, the power supply signal does not necessarily need to be modulated.

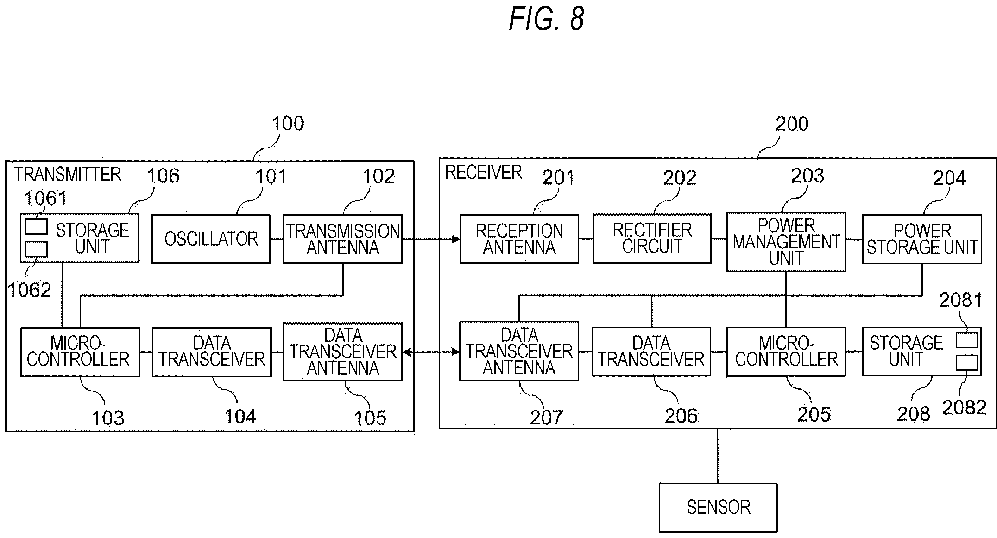

FIG. 8 is a block diagram showing a configuration example of the transmitter 100 and the receiver 200 according to a modification. In FIG. 8, unlike the transmitter 100 and the receiver 200 shown in FIG. 2, the transmitter 100 is not provided with the modulator 107, and the receiver 200 is not provided with the demodulator 209.

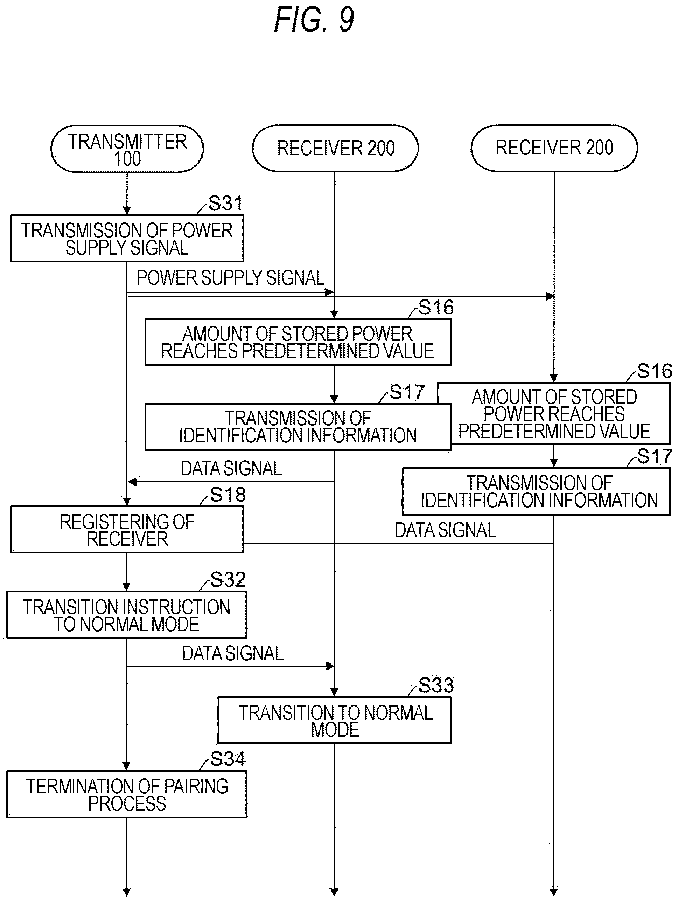

FIG. 9 is a diagram for explaining another example of the operations of the transmitter 100 and the plurality of receivers 200 when the transmitter 100 and the plurality of receivers 200 perform pairing. In the example explained in FIG. 9, for example, the receiver 200 is a receiver 200 that performs pairing with the transmitter 100 for the first time.

An administrator of the WPT system 1 instructs a transmitter 100 to initiate pairing when a plurality of receivers 200 are present within a predetermined range. The instruction to initiate pairing may be input by pressing a physical button provided on the transmitter 100, or may be input via the first information processing device 300.

In step S31, when the pairing is initiated, the microcontroller 103 of the transmitter 100 causes the transmission antenna 102 to transmit a power supply signal not modulated with the instruction signal or the identification information. For example, the transmission antenna 102 radiates a signal oscillated by the oscillator 101 as a power supply signal.

The plurality of receivers 200 located within a predetermined range from the transmitter 100 receive the power supply signal radiated from the transmitter 100. The receiver 200 is charged by the power supply signal radiated from the transmitter 100. Specifically, the reception antenna 201 receives the power supply signal. The rectifier 202 rectifies the received power supply signal and converts it into a direct current voltage. The power management unit 203 controls the charging voltage based on the direct current voltage and charges the power storage unit 204.

The transmitter 100 and the receiver 200 perform steps S16 to S18, similar to the example shown in FIG. 6. Note that, in step S17 of FIG. 9, the receiver 200 transmits a data signal without specifying the identification information of the transmitter 100 because the receiver 200 does not recognize the identification information of the transmitter 100. Therefore, the microcontroller 103 stores the identification information of the receiver 200 in the receiver information 1062.

In step S32, the microcontroller 103 transmits a data signal including identification information of the device itself (transmitter) to the plurality of receivers 200. Specifically, the microcontroller 103 reads out the identification information of the transmitter from the transmitter information 1061, and modulates a carrier wave with the read-out identification information, thereby generating a data signal. The microcontroller 103 reads out the identification information of the associated receiver 200 from the receiver information 1062 and sets it as a transmission destination. The microcontroller 103 radiates the data signal from the data transceiver antenna 105 to the receiver 200 as a destination.

In step S33, the microcontroller 205 registers the transmitter 100. Specifically, the reception antenna 201 demodulates the received data and acquires the identification information of the transmitter 100. The microcontroller 203 stores the acquired identification information in the receiver information 2081.

In step S34, the microcontroller 103 terminates the pairing process. Specifically, the microcontroller 103 terminates the pairing process when all of the data signals transmitted to the receivers 200 are normally received by the receivers 200. If the data signal is not normally received by the receiver 200, the microcontroller 103 repeats transmitting the data signal to the receiver 200 that did not normally receive the data signal.

Thereby, the transmitter 100 and the receiver 200 are associated with each other, and data signals are transmitted and received between the associated transmitter 100 and receiver 200.

In this way, the transmitter 100 transmits a data signal including the identification information of the transmitter to the receiver 200, thereby enabling efficient pairing between the transmitter 100 and the receiver 200, even when the transmitter 100 is not provided with the modulator 107, and the receiver 200 is not provided with the demodulator 209.

In addition, in FIGS. 6 and 7 of the above embodiment, the example has been described in which the receiver 200 transmits a data signal by specifying the identification information of the transmitter 100, as shown in step S17. However, the operation of the receiver 200 at this time is not limited thereto. In step S17 of FIGS. 6 and 7, the receiver 200 may transmit a data signal without setting the identification information.

### <4 Basic Hardware Configuration of Computer>

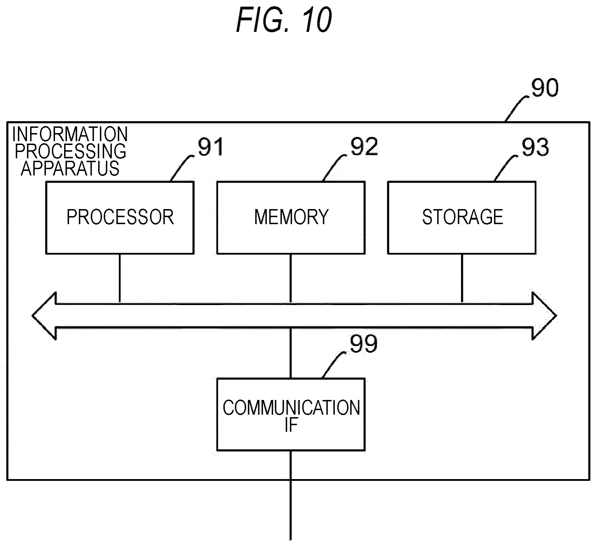

FIG. 10 is a block diagram showing a basic hardware configuration of a computer 90. The computer 90 includes at least a processor 91, a main storage device 92, an auxiliary storage device 93, and a communication IF 99 (interface). They are electrically connected to each other by a bus.

The processor 91 is hardware for executing an instruction set described in a program. The processor 91 includes an arithmetic unit, a register, a peripheral circuit, and the like.

The main storage device 92 is for temporarily storing a program, data processed by the program, and the like. For example, it is a volatile memory such as DRAM (Dynamic Random Access Memory).

The auxiliary storage device 93 is a storage device for storing data and a program. Examples include a flash memory, a hard disk drive (HDD), a magneto-optical disk, a CD-ROM, a DVD-ROM, and a semiconductor memory.

The communication IF 99 is an interface for inputting and outputting signals for communication with other computers via a network using a wired or wireless communication standard.

The network includes various mobile communication systems constructed using the Internet, a LAN, a wireless base station, and the like. For example, the network includes 3G, 4G, and 5G mobile communication systems, LTE (Long Term Evolution), and wireless networks (e.g., Wi-Fi (registered trademark)) capable of connecting to the Internet via a predetermined access point. In the case of wireless connection, communication protocols may include, for example, Z-Wave (registered trademark), ZigBee (registered trademark), Bluetooth (registered trademark), and the like. In the case of wired connection, the network also includes direct connection via a USB (Universal Serial Bus) cable, and the like.

Note that the computer 90 may be virtually implemented by distributing all or part of each hardware configuration across a plurality of computers 90 and interconnecting them via a network. As such, the computer 90 is a concept that includes not only a computer 90 housed in a single housing or case, but also a virtualized computer system.

### <Basic Functional Configuration of Computer 90>

The functional configuration of a computer implemented by the basic hardware configuration of the computer 90 shown in FIG. 10 is described. The computer includes at least functional units of a control unit, a storage unit, and a communication unit.

Note that the functional units of the computer 90 may be implemented by distributing all or part of each functional unit across a plurality of computers 90 interconnected via a network. As such, the computer 90 is a concept that includes not only a single computer 90, but also a virtualized computer system.

The control unit is implemented by the processor 91 reading out various programs stored in the auxiliary storage device 93, loading them into the main storage device 92, and executing processing in accordance with the programs. The control unit may implement functional units that perform various types of information processing depending on the type of program. As a result, the computer is implemented as an information processing device that performs information processing.

The storage unit is implemented by the main storage device 92 and the auxiliary storage device 93. The storage unit stores data, various programs, and various databases. Additionally, the processor 91 may secure a storage area corresponding to a storage unit in the main storage device 92 or the auxiliary storage device 93 depending on the program. In addition, the control unit may cause the processor 91 to perform processing such as addition, updating, and deletion of data stored in the storage unit, in accordance with various programs.

The database refers to a relational database (RDB) and is for managing data sets, called tables, which are structured in tabular format defined by rows and columns, in association with one another. In the database, a table is called a table, a column in a table is called a column, and a row in a table is called a record. In the relational database (RDB), relationships between tables may be defined and the tables may be associated with one another.

Typically, each table has a column set as a key for uniquely identifying a record. However, it is not necessarily required to set a key for a column. The control unit may cause the processor 91 to perform addition, updating, and deletion of a record with respect to a specific table stored in the storage unit, in accordance with various programs.

The communication unit is implemented by the communication IF 99. The communication unit implements the function of communicating with other computers 90 via a network. The communication unit may receive information transmitted from another computer 90 and input it into the control unit. The control unit may cause the processor 91 to perform information processing on the received information, in accordance with various programs. Additionally, the communication unit may transmit information output from the control unit to another computer 90.

While several embodiments of the present disclosure have been described above, these embodiments can be implemented in various other forms, and various omissions, substitutions, and changes can be made without departing from the gist of the invention. These embodiments or modifications thereof are included not only within the scope and gist of the invention, but also within the scope of the invention recited in the claims and equivalents thereof.

In addition, in the above description, "processor" refers to one or more processors. At least one processor is typically a microprocessor, such as a central processing unit (CPU), but may be another type of processor, such as a graphics processing unit (GPU). At least one processor may be a single-core or a multi-core.

Additionally, at least one processor may be a processor in the broad sense, such as a hardware circuit (e.g., a field-programmable gate array (FPGA) or an application specific integrated circuit (ASIC)) that performs some or all of processing.

In addition, in the above description, there is a case where the expression "xxx table" is used to describe information for which an output is obtained for an input. This information may be data of any structure, and may also be a learning model such as a neural network that generates an output for an input. Therefore, the expression "xxx table" may be referred to as "xxx information."

In addition, in the above description, the configuration of each table is an example, one table may be divided into two or more tables, and all or part of the two or more tables may be one table.

In addition, in the above description, there is a case where a "program" is used as the subject when describing the processing. However, since the program is executed by a processor and performs predetermined processing using, as appropriate, a storage unit and/or an interface unit, etc., the processor (or a device such as a controller including the processor, or a microcontroller) may be used as the subject of the processing.

The program may be installed on a device such as a calculator, or may reside on, for example, a program distribution server or on a (e.g., non-transitory) storage medium that the calculator can read. In addition, in the following description, two or more programs may be implemented as one program, and one program may be implemented as two or more programs.

In addition, in the above description, identification numbers are used as identification information of various objects. However, types of identification information (e.g., identifiers including alphabetic characters or symbols) other than identification numbers may be employed.

In addition, in the above description, when describing elements of the same type without distinguishing between them, a reference sign (or a common reference sign) may be used, and when describing elements of the same type while distinguishing between them, element identification numbers (or reference signs) may be used.

In addition, in the following description, control lines and information lines are illustrated only to the extent deemed necessary for explanation, and do not necessarily represent all of the control and information lines included in the actual product. All components may be interconnected.

### <Additional Notes>

The matters described in each of the above embodiments are additionally described below.

### (Note 1)

A system including a transmitter and one or more receivers, in which the transmitter is configured to execute:
a step of transmitting a power supply signal;
a step of receiving, from the receiver, a data signal comprising identification information of the receiver; and
a step of registering the receiver, based on the received data signal, and unique identification information is assigned to the receiver, and
the receiver is configured to execute a step of transmitting the data signal comprising the identification information, in a case where an amount of power stored in a power storage unit by the power supply signal transmitted from the transmitter reaches a predetermined value.

### (Note 2)

In (Note 1), the transmitter is configured to execute:
a step of instructing the plurality of receivers to transition to a first mode for associating the transmitter and the receiver with each other; and
a step of transmitting identification information of the transmitter to the plurality of receivers, after instructing the transition to the first mode, and
the receiver is configured to transmit the data signal to a transmitter identified by the received identification information, in the step of transmitting the data signal.

### (Note 3)

In (Note 2), the transmitter is configured to modulate the power supply signal with information for instructing the plurality of receivers to transition to the first mode, in the step of instructing the plurality of receivers.

### (Note 4)

In (Note 2) or (Note 3), the transmitter is configured to modulate the power supply signal with the identification information of the transmitter to transmit the identification information of the transmitter to the receiver, in the step of transmitting identification information.

### (Note 5)

In any one of (Note 1) to (Note 4), the receiver is set to a first mode for associating the transmitter and the receiver with each other,
the transmitter is configured to execute a step of transmitting identification information of the transmitter to the receiver in the first mode, and
the receiver is configured to transmit the data signal to a transmitter identified by the received identification information, in the step of transmitting the data signal.

### (Note 6)

In any one of (Note 1) to (Note 5), the transmitter is configured to execute a step of transmitting a data signal comprising identification information of the transmitter to the registered receiver.

### (Note 7)

In any one of (Note 1) to (Note 6), the receiver is configured to transmit the data signal in accordance with a specification based on identification information of the receiver, in the step of transmitting the data signal.

### (Note 8)

In (Note 7), the receiver is configured to transmit the data signal using a frequency, a period, or a combination thereof corresponding to identification information of the receiver, in the step of transmitting the data signal.

### (Note 9)

A transmitter used in the system in any of (Note 1) to (Note 8).

### (Note 10)

A receiver used in the system in any of (Note 1) to (Note 8).

### (Note 11)

A method performed by a system including a transmitter and a receiver, wherein the transmitter and the receiver is configured to execute all the steps included in any one of the inventions according to (Note 1) to (Note 8).

### (Note 12)

A program executed by a system including a transmitter and a receiver, wherein the program is configured to cause the transmitter and the receiver to execute all the steps of any one of the inventions according to (Note 1) to (Note 8).

### REFERENCE SIGNS LIST

- 1: WPT system
- 100: transmitter
- 101: oscillator
- 102: transmission antenna
- 103: microcontroller
- 104: data transceiver
- 105: data transceiver antenna
- 200: receiver
- 201: reception antenna
- 202: rectifier
- 203: power management unit
- 204: power storage unit
- 205: microcontroller
- 206: data transceiver
- 207: data transceiver antenna
- 300: first information processing device
- 400: second information processing device

## Claims

1. A system comprising:
a transmitter; and
one or more receivers,
wherein the transmitter is configured to execute:
a step of transmitting a power supply signal;
a step of receiving, from the receiver, a data signal comprising identification information of the receiver; and
a step of registering the receiver, based on the received data signal, and unique identification information is assigned to the receiver, and
the receiver is configured to execute a step of transmitting the data signal comprising the identification information, in a case where an amount of power stored in a power storage unit by the power supply signal transmitted from the transmitter reaches a predetermined value.

2. The system according to claim 1,
wherein the transmitter is configured to execute:
a step of instructing the plurality of receivers to transition to a first mode for associating the transmitter and the receiver with each other; and
a step of transmitting identification information of the transmitter to the plurality of receivers, after instructing the transition to the first mode, and
the receiver is configured to transmit the data signal to a transmitter identified by the received identification information, in the step of transmitting the data signal.

3. The system according to claim 2, wherein the transmitter is configured to modulate the power supply signal with information for instructing the plurality of receivers to transition to the first mode, in the step of instructing the plurality of receivers.

4. The system according to claim 2 or 3, wherein the transmitter is configured to modulate the power supply signal with the identification information of the transmitter to transmit the identification information of the transmitter to the receiver, in the step of transmitting identification information.

5. The system according to any one of claims 1 to 4,
wherein the receiver is set to a first mode for associating the transmitter and the receiver with each other,
the transmitter is configured to execute a step of transmitting identification information of the transmitter to the receiver in the first mode, and
the receiver is configured to transmit the data signal to a transmitter identified by the received identification information, in the step of transmitting the data signal.

6. The system according to any one of claims 1 to 5, wherein the transmitter is configured to execute a step of transmitting a data signal comprising identification information of the transmitter to the registered receiver.

7. The system according to any one of claims 1 to 6, wherein the receiver is configured to transmit the data signal in accordance with a specification based on identification information of the receiver, in the step of transmitting the data signal.

8. The system according to claim 7, wherein the receiver is configured to transmit the data signal using a frequency, a period, or a combination thereof corresponding to identification information of the receiver, in the step of transmitting the data signal.

9. A transmitter used in the system according to any one of claims 1 to 8.

10. A receiver used in the system according to any one of claims 1 to 8.

11. A method performed by a system comprising a transmitter and a receiver, wherein the transmitter and the receiver is configured to execute all the steps included in the system according to any one of claims 1 to 8.

12. A program executed by a system comprising a transmitter and a receiver, wherein the program is configured to cause the transmitter and the receiver to execute all the steps included in the system according to any one of claims 1 to 8.
